# EUROPÄISCHE PATENTSCHRIFT

(11) **EP 0 591 314 B1**
(45) Veröffentlichungstag und Bekanntmachung des Hinweises auf die Patenterteilung: **13.09.1995**
(21) Anmeldenummer: 92912995.5
(22) Anmeldetag: 23.06.1992
(51) Int. Cl.: F23G 7/00, F42B 33/06

(54) **ANLAGE UND VERFAHREN ZUM ABBRENNEN VON EXPLOSIVSTOFFEN**
PLANT AND PROCESS FOR INCINERATING EXPLOSIVES
USINE ET PROCEDE D'INCINERATION DE MATIERES EXPLOSIVES

(30) Priorität: 26.06.1991 DE 4121133
(43) Veröffentlichungstag der Anmeldung: 13.04.1994
(73) Patentinhaber: bowas-induplan chemie ges.m.b.h., A-5020 Salzburg (AT)
(72) Erfinder: Fairweather, John, Anthony, A-5151 Nussdorf 121 (AT); Schulze, Walter, D-3450 Holzminden (DE); Laffer, Markus, CH-3752 Wimmis (CH)
(74) Vertreter: Lieck, Hans-Peter, Dipl.-Ing.
(86) Internationale Anmeldenummer: EP9201415
(87) Internationale Veröffentlichungsnummer: WO9300557

(56) Entgegenhaltungen:
- EP-A- 0 349 865
- DE-A- 2 220 702
- DE-C- 4 041 744
- DE-C- 4 115 232

## Beschreibung

Die Erfindung betrifft ein Verfahren zum Abbrennen von Explosivstoffen, bei dem die Explosivstoffe in einem Abbrenn-Reaktor abgebrannt und die beim Abbrand entstehenden Rauchgase mit in den Abbrenn-Reaktor eingespeister Frischluft vermengt und dadurch abgekühlt und sodann aus dem Abbrenn-Reaktor abgeführt werden.

Die Erfindung betrifft ferner eine Anlage zum Abbrennen von Explosivstoffen, mit einem Abbrenn-Reaktor, in dem die Explosivstoffe abgebrannt werden, wobei die beim Abbrand entstehenden Rauchgase mit in den Abbrenn-Reaktor eingespeister Frischluft vermengt und dadurch abgekühlt und sodann über Abgasleitungen aus dem Abbrenn-Reaktor abgeführt werden.

Sowohl derartige Verfahren als auch derartige Anlagen sind bekannt und dienen der Entsorgung von Gegenständen mit explosionsgefährlichen oder explosionsfähigen Stoffen, z.B. Munition, Raketen, pyrotechnische Sätze und dergleichen, insbesondere aus dem militärischen Bereich. Die Gründe für eine Entsorgung liegen entweder darin, daß die genannten Gegenstände ein bestimmtes Alter erreicht haben, ab dem die bei der herstellung der explosionsgefährlichen bzw. explosionsfähigen Stoffe zugesicherten und bei deren Verwendung erforderlichen definierten Eigenschaften nicht mehr garantiert werden können, oder aber weil sich beispielsweise Waffensysteme fortentwickelt haben und die für diese Waffensysteme bereits produzierte und eingelagerte Munition ihrer bestimmungsgemäßen Verwendung nicht mehr zugeführt werden kann. Aber auch die Entsorgung von sogenannten "Altlasten" hat gerade in jüngster Zeit im Zuge des in den letzten Jahren allgemein gesteigerten Umweltbewußtseins an Bedeutung gewonnen. Während beispielsweise noch vor vierzig Jahren die bei Kriegshandlungen requirierte Munition entweder vergraben oder aber auf hoher See versenkt wurde, ist man sich heute zumindest in den Industriestaaten der langfristigen Umweltschädigung derartiger Maßnahmen bewußt.

Im folgenden werden die genannten explosionsgefährlichen bzw. explosionsfähigen Stoffe mit dem Begriff "Explosivstoffe" bezeichnet. Hierunter versteht man im allgemeinen feste, flüssige und gelatinöse Stoffe und Stoffgemische, die zum Zweck des Sprengens oder Treibens hergestellt werden. Jedoch werden vorliegend unter dem Begriff der Explosivstoffe auch solche Stoffe zusammengefaßt, die nicht zum Zweck des Sprengens oder Schießens hergestellt worden sind, z.B. organische Peroxide als Katalysatoren, Gasentbindungsmittel für die heutige Schaum- und Kunststofftechnik, manche Schädlingsbekämpfungsmittel u.v.m. Dazu gehört z.B. auch das allgemein bekannte Gemisch "Thermit", worunter Mischungen aus Aluminium und Eisenoxid verstanden werden, die sich unter starker Wärmeentwicklung zu Aluminiumoxid und Eisen umsetzen. Diese Wärmeentwicklung wird beispielsweise zum Schienenschweißen verwenden.

Explosivstoffe können sowohl in Form von Schüttgütern beliebiger Korngrößen, in Form von Anhaftungen, in Form von Körpern mit definierten Abmessungen (z.B. Preßlinge) oder aber auch als Füllmasse in Hohlkörpern vorliegen. Als Anhalt der unter dem Begriff "Explosivstoffe" zu verstehenden Stoffgruppen kann die Auflistung in Rudolf Meyer "Explosivstoffe", 6. Auflage, Seite 127 ff. dienen.

Die Entsorgung von Explosivstoffen erfolgt aufgrund der mit ihrer Handhabung verbundenen Unsicherheiten für Personal und umgebendes Material weltweit durch sogenanntes Abbrennen oder durch Sprengung jener Stoffe. Von "Abbrennen" wird gesprochen, da praktisch alle Explosivstoffe, die in größeren Massen vorhanden sind, nach Einleitung der chemischen Zerfallreaktionen ohne Zugabe eines weiteren Reaktionspartners, insbesondere ohne den sonst bei einer "Verbrennung" üblichen Luftsauerstoff, weiterreagieren.

Während das Abbrennen von Explosivstoffen bis in die Gegenwart unter Gewährleistung der erforderlichen Personensicherheit aber unter Mißachtung jeglicher Emissionsminderung in Bezug auf die beim Abbrand entstehenden gasförmigen Reaktionsprodukte überwiegend noch im Freien vollzogen wird, sind in jüngster Zeit halbgeschlossene und geschlossene Anlagen zum Abbrennen von Explosivstoffen und damit verbundene Verfahren bekannt geworden, welche die beim Abbrand entstehenden gasförmigen Reaktionsprodukte (Abgase) erfassen und beispielsweise einer Schadstoffminderungsanlage zuführen, um so die gesetzlichen Auflagen zur Reinhaltung der Luft, insbesondere der 4. bzw. 17. Bundes-Immissionsschutzverordnung (4. bzw. 17. BImSchV), einzuhalten.

Um die beim Abbrand der Explosivstoffe frei werdenden Abgase der Schadstoffminderungsanlage zuführen zu können, müssen die Abgase von der Prozeßtemperatur, die mehrere tausend Grad Celsius betragen kann, zum Schutz der nachgeschalteten Anlagen auf eine Temperatur von beispielsweise 300°C heruntergekühlt werden. Diese Abkühlung der beim Abbrand entstehenden Rauchgase (Abgase) erfolgt durch Mischen jener Abgase mittels in den Abbrenn-Reaktor eingespeister Frischluft. Das aus dem Abbrenn-Reaktor abzuführende Gasgemisch besteht somit aus den beim Abbrand der Explosivstoffe im Reaktor entstehenden gasförmigen Reaktionsprodukten (Rauchgase oder auch Abgase) und aus der in den Abbrenn-Reaktoren eingespeisten Frischluft. Dieses Gasgemisch durchläuft im allgemeinen zunächst Waschstufen, um feste, sauere und alkalische Bestandteile auszuwaschen. Hierbei wird das Gasgemisch auf eine Temperatur abgekühlt, die deutlich unter 100°C liegt.

Aus der EP-A-0 349 865 ist ein Verfahren zum Abbrennen von Explosivstoffen bekannt, bei dem die Explosivstoffe in einem Abbrenn-Reaktor abgebrannt werden. Darüber hinaus offenbart dieses Dokument eine Anlage zur Durchführung dieses bekannten Verfahrens.

Der Nachteil dieser bekannten Verfahren bzw. Anlagen zum Abbrennen von Explosivstoffen besteht in dem verhältnismäßig schlechten thermo-energetischen Wirkungsgrad. Die soeben genannten Waschstufen der Schadstoffminderungsanlage mindern nämlich nicht-oxidierte organische Bestandteile, beispielsweise Kohlenmonoxid und Stickstoffoxid-Anteile nicht wesentlich, so daß das Gasgemisch nach Passieren der Waschstufen mit hohem Energieaufwand wieder aufgeheizt werden muß, um die sogenannten noch in dem Gasgemisch enthaltenen Schadstoffe in einem thermischen, katalytischen oder nicht-katalytischen Prozeß zu mindern. Hinzu kommt, daß die bekannten Verfahren bzw. Anlagen der eingangs genannten Art aufgrund der relativ niedrigen Temperatur des aus der Schadstoffminderungsanlage des Abbrenn-Reaktors austretenden Gasgemischs schlechte Voraussetzungen für eine Rückgewinnung der thermischen Energie bildet.

In Bezug auf die einen Ansatzpunkt der vorliegenden Erfindung bildende energetische Bilanz beim Abbrennen von Explosivstoffen sind ferner solche bekannte Verfahren zu nennen, bei denen aus den Explosivstoffen unter Vermengung mit Wasser ein sogenannter "Slurry" gebildet wird, eine Aufschlämmung der Explosivstoffe in Wasser, welche zum Zwecke des Abbrennens dosiert in den Brennraum beispielsweise einer Müllverbrennungsanlage eingegeben wird.

Der Nachteil dieses bekannten Verfahrens besteht ebenfalls in dem schlechten energetischen Wirkungsgrad. Der Slurry besteht nämlich im allgemeinen aus bis zu 90 % Wasser, das in dem Brennraum der Müllverbrennungsanlage unter Zufuhr entsprechender Mengen Brennstoff verdampft werden muß.

Schließlich ist es auch bekannt, daß metallhaltige Explosivstoffe bei ihrer Reaktion hochtemperaturbeständige anorganische Verbindungen in den Schlacken bilden, die nach ihrer Abkühlung mit Wasser reagieren. Um einen deponiefähigen Rückstand zu erhalten, muß also die Schlacke chemisch aufgearbeitet werden. Somit müssen die gesamten Schlacken den Prozeß der chemischen Aufarbeitung zu deponiefähigen Abfallstoffen durchlaufen, wenn die Explosivstoffe - was häufig nicht zu vermeiden sein wird - beim Abbrand in der Müllverbrennungsanlage mit anderen Produkten vermischt werden.

Die Nachteile aller vorgenannten bekannten Verfahren bzw. Anlagen zum Abbrennen von Explosivstoffen lassen sich dahingehend zusammenfassen, daß entweder das Abbrennen der Explosivstoffe selbst (Slurry) oder aber die sich an das Abbrennen anschließende Schadstoffminderung einen hohen Energieaufwand erfordert und zudem eine Rückgewinnung der thermischen Energie aufgrund der verhältnismäßig niedrigen Temperaturen des Gasgemischs nach dessen Reinigung nicht oder nur unzureichend möglich ist.

Der vorliegenden Erfindung lag somit die Problemstellung zugrunde, den thermo-energetischen Wirkungsgrad eines Verfahrens zum Abbrennen von Explosivstoffen der eingangs genannten Art bzw. einer Anlage zum Abbrennen von Explosivstoffen der eingangs genannten Art zu verbessern.

Die erfindungsgemäße Lösung dieser Problemstellung sieht bei einem Verfahren der eingangs genannten Art vor, daß das aus dem Abbrenn-Reaktor abgeführte Gasgemisch der Brennkammer einer Feuerungsanlage zur Verbrennung von Brennstoffen zugeführt wird.

Das der vorliegenden Erfindung zugrunde liegende technische Problem wird ferner durch eine Anlage zum Abbrennen von Explosivstoffen der eingangs genannten Art gelöst, bei der der Abbrenn-Reaktor mittels seiner Abgasleitungen an eine Feuerungsanlage zur Verbrennung von Brennstoffen angeschlossen ist.

Die Vorteile der Erfindung liegen insbesondere darin, daß ein einfach zu realisierendes und dabei sehr effektives Verfahren zur Minimierung der zur Entsorgung von Explosivstoffen durch Abbrennen mit anschließender Schadstoffminderung aufzuwendenden Energie sowie zur Maximierung der Verwertung und Rückgewinnung der beim Abbrand der Explosivstoffe entstehenden hohen thermischen Energie, somit zusammenfassend eine Optimierung des gesamten Verfahrens hinsichtlich der thermo-energetischen Wirkungsgrads erzielbar ist. Das erfindungsgemäße Verfahren ermöglichst es, unter optimaler Nutzung der Prozeßwärme sowohl Explosivstoffe abzubrennen, brennbare Abfälle bzw. andere Brennstoffe unter Nutzung der beim Abbrand entstehenden thermischen Energie zu verbrennen und dabei in vorbildlicher Weise die Auflagen zur Reinhaltung der Luft zu erfüllen. Die erfindungsgemäße Anlage zum Abbrennen von Explosivstoffen erzielt diese Vorteile ebenfalls.

Erfindungsgemäß wird das aus dem Abbrenn-Reaktor abgeführte Gasgemisch, welches durch die eingespeiste Frischluft noch etwa 16 bis 18 Volumenprozent Sauerstoff enthält, als Sauerstoffträger einer üblichen Verbrennung als Brennergas, also teilweise oder vollständig anstelle der zur Verbrennung erforderlichen Luft, zugeführt. Hierbei soll unter der Bezeichnung "Verbrennung" jegliche Art Verbrennung von Brennstoffen zu den verschiedensten Zwecken, beispielsweise zur Wärmeerzeugung in einem Kraftwerk, zur Abfallverbrennung in einer Müllverbrennungsanlage oder aber auch zur Wärmeerzeugung in einem Zementwerk verstanden werden. Der Wirkungsgrad dieser in einer Brennkammer stattfindenden Verbrennung wird dadurch beträchtlich erhöht, daß zu dieser Verbrennung die beim Abbrand der Explosivstoffe in dem Abbrenn-Reaktor freiwerdende thermische Energie verwendet wird.

Ein weiterer Vorteil der erfindungsgemäßen Lösung liegt darin, daß mit der dem Abbrand nachgeschalteten Verbrennung die noch vorhandenen organgischen Bestandteile und das Kohlenmonoxid zur höchsten Stufe oxidiert werden.

Ferner ist es von Vorteil, daß die Abbrennanlage und die Verbrennungsanlage gemeinsam die jeder Verbrennungsanlage nachgeschaltete Schadstoffminderungsanlage benutzen können, so daß sich eine separate Schadstoffminderungsanlage allein für den Abbrenn-Reaktor erübrigt.

Schließlich ist es bei dem erfindungsgemäßen Verfahren und bei der erfindungsgemäßen Anlage zum Abbrennen von Explosivstoffen von großem Vorteil, daß durch die Zufuhr des eine hohe thermische Energie tragenden Gasgemisches von dem Abbrenn-Reaktor in die Feuerungsanlage in letzterer erheblich weniger Brennstoff nötig ist, was sich in beachtlichem Maße auf die Wirtschaftlichkeit des Verbrennungsteils der Gesamtanlage bzw. des Gesamtverfahrens auswirkt.

Erfindungsgemäße Weiterbildungen werden bezüglich des Verfahrens in den Unteransprüchen 2 bis 10 und bezüglich der Anlage in den Unteransprüchen 12 bis 19 angegeben.

Da Abbrennanlagen häufig zur besseren zeitlichen Ausnutzung mindestens zwei Abbrenn-Reaktoren aufweisen, von denen einer beispielsweise mit Explosivstoffen beschickt wird, während in dem anderen gerade abgebrannt wird, ist gemäß einer vorteilhaften Weiterbildung des erfindungsgemäßen Verfahrens vorgesehen, daß der Brennkammer der Feuerungsanlage die Gasgemische mehrerer in Bezug auf die Leitung des Gasgemischs in Parallelschaltung betriebener Abbrenn-Reaktoren zugeführt werden.

Alternativ hierzu kann mit dem gleichen Ziel der optimalen Nutzung mehrerer gleichzeitig betriebener Abbrenn-Reaktoren in vorteilhafter Weise vorgesehen sein, daß das aus dem Abbrenn-Reaktor abgeführte Gasgemisch einem weiteren Abbrenn-Reaktor zugeführt wird, und daß das in dem weiteren Abbrenn-Reaktor aus dem zugeführten Gasgemisch und den Rauchgasen entstehende weitere Gasgemisch der Brennkammer der Feuerungsanlage zugeführt wird.

Da die in den Abbrenn-Reaktor eingespeiste Frischluft den Hauptzweck einer Abkühlung der beim Abbrand entstehenden Rauchgase verfolgt, ist für die vorstehend erläuterte "Reihenschaltung" von Abbrenn-Reaktoren, bei der das aus einem Abbrenn-Reaktor austretende Gasgemisch anstelle oder zusammen mit Frischluft in den nachfolgenden weiteren Abbrenn-Reaktor eingespeist wird, bevorzugterweise vorgesehen, daß zwischen den benachbarten Abbrenn-Reaktoren eine Abkühlung des Gasgemisches, insbesondere durch Zufuhr von Frischluft, erfolgt.

Einer weiteren Verbesserung der Energiebilanz der erfindungsgemäßen Anlage dient eine Weiterbildung, nach der das aus der Brennkammer der Feuerungsanlage abgeführte Abgasgemisch einer Energierückgewinnungsanlage zugeführt wird.

Vorzugsweise werden die aus der Energierückgewinnungsanlage austretenden und aufgrund der Energierückgewinnung abgekühlten Abgase einer Schadstoffminderungsanlage zugeleitet. Der große Vorteil dieser Weiterbildung der Erfindung liegt darin, daß sowohl für die Abbrennanlage als auch für die Feuerungsanlage nur eine gemeinsame Schadstoffminderungsanlage erforderlich ist, bei der die ansonsten übliche Nachverbrennungsstufe zur Nachverbrennung der nicht-oxidierten organischen Bestandteile (beispielsweise Kohlenmonoxid und Stickstoffoxidanteile) entweder ganz fehlen oder aber wesentlich geringer dimensioniert werden kann. Jedenfalls ist es von besonderem Vorteil, daß bei dem erfindungsgemäßen Verfahren nur eine gemeinsame Schadstoffminderungsanlage erforderlich ist.

Weitere vorteilhafte Ausbildungen des erfindungsgemäßen Verfahrens ergeben sich dadurch, daß die Gasgemische verschiedener Verfahrensstadien in den Prozeß zurückgeführt werden können. So ist es in vorteilhafter Weise vorgesehen, daß die Abkühlung des Gasgemisches zwischen den Abbrenn-Reaktoren (Reihenschaltung der Reaktoren) durch Rückführung des von der Schadstoffminderungsanlage abgegebenen Abgasgemisches erfolgt.

Alternativ oder ergänzend hierzu kann mit dem Vorteil einer weiteren Optimierung der Energiebilanz des gesamten Verfahrens vorgesehen sein, daß das aus der Energierückgewinnungsanlage abgeführte Abgas oder aber auch das von der Schadstoffminderungsanlage abgegebene Abgasgemisch ganz oder teilweise dem bzw. den Abbrenn-Reaktor(en) zugeführt wird. Somit wird das Abgasgemisch entweder anstelle oder ergänzend zur Frischluft in jeden Abbrenn-Reaktor eingespeist, wodurch es möglich ist, den Sauerstoffgehalt in jedem Abbrenn-Reaktor auf ein gewünschtes Maß einzustellen.

Zwei vorteilhafte Weiterbildungen der erfindungsgemäßen Anlage zum Abbrennen von Explosivstoffen sehen alternativ vor, daß entweder mehrere Abbrenn-Reaktoren in Bezug auf die Leitung des Abgasgemischs parallel oder aber in Reihe geschaltet sind. Im Falle der Parallelschaltung werden die aus der Frischluft, welche in jeden Abbrenn-Reaktor zur Kühlung eingespeist wurde, und aus den beim Abbrand der Explosivstoffe entstehenden Rauchgasen bestehenden (Ab-)Gasgemische zusammengeführt und anschließend der Feuerungsanlage zur Verbrennung von Brennstoffen zugeleitet. Im Fall der Reihenschaltung von Abbrenn-Reaktoren wird jeweils das aus einem Abbrenn-Reaktor abgeführte Gasgemisch (Zuluft und Rauchgase) dem nachfolgenden Abbrenn-Reaktor als Zuluft anstelle der beim ersten Abbrenn-Reaktor eingespeisten Frischluft oder aber ergänzend hierzu eingespeist.

Bezüglich der Reihenschaltung von Abbrenn-Reaktoren ist bevorzugterweise vorgesehen, daß im Abgasstrom zwischen jeweils benachbarten Reaktoren eine Kühlstufe angeordnet ist, welche gemäß weiterer Weiterbildungen in vorteilhafter Weise entweder einen Wärmetauscher, insbesondere einen Quencher oder aber eine Ansaugvorrichtung für Frischluft enthalten kann. Diese Kühlstufe dient der Abkühlung des in einen nachfolgenden Abbrenn-Reaktor einzuspeisenden Gasgemischs auf eine beliebige Temperatur, beispielsweise unter 100° C.

Mit dem Vorteil einer weiteren Schadstoffverarmung der Prozeßgase ist vorgesehen, daß dem bzw. den Abbrenn-Reaktor(en) Filter, insbesondere Partikelfilter vor- und/oder nachgeschaltet sind.

In an sich bekannter Weise ist ferner vorzugsweise vorgesehen, daß das Abgasgemisch der Feuerungsanlage einer Energierückgewinnungsanlage, beispielsweise einem Kraftwerk oder dergleichen, zugeführt wird.

Ein besonderer Vorteil der erfindungsgemäßen Anlage ist durch eine Weiterbildung erzielbar, nach der sich an die Energierückgewinnungsanlage eine Schadstoffminderungsanlage anschließt, der die Abgase der Energierückgewinnungsanlage zugeleitet werden. Somit benötigt die gesamte Anlage, welche einen Abbrennteil zum Abbrennen der Explosivstoffe und einen Verbrennungsteil zum Verbrennen von Brennstoffen umfaßt, nur eine einzige beiden Anlagenteilen gemeinsame Schadstoffminderungsanlage, wobei es sich ferner besonders vorteilhaft auswirkt, daß diese Schadstoffminderungsanlage auf die ansonsten zur Nachverbrennung der nicht-oxidierten organischen Bestandteile wie Kohlenmonoxid und Stickstoffoxidanteile ganz oder teilweise verzichten kann, da diese Nachverbrennung im wesentlichen im Verbrennungsteil der Gesamtanlage stattfindet.

Wie bereits vorstehend anhand des erfindungsgemäßen Verfahrens beschrieben ist es selbstverständlich auch bei der erfindungsgemäßen Anlage von Vorteil, wenn beispielsweise die im Abgasstrom zwischen jeweils benachbarten Abbrenn-Reaktoren angeordnete Kühlstufe (Reihenschaltung) zur Kühlung das von der Schadstoffminderungsanlage abgegebene Gasgemisch ansaugt.

Im folgenden wird ein bevorzugtes Ausführungsbeispiel des erfindungsgemäßen Verfahrens sowie der erfindungsgemäßen Anlage zum Abbrennen von Explosivstoffen anhand zweier schematischer Blockdiagramme erläutert.

Es zeigen:
- Fig. 1: das Funktionsschaltbild eines Verfahrens bzw. einer Anlage zum Abbrennen von Explosivstoffen mit zwei parallel geschalteten Abbrenn-Reaktoren; und
- Fig. 2: ein ähnliches Schaubild gemäß Fig. 1, jedoch mit einer Reihenschaltung zweier Abbrenn-Reaktoren mit zwischengeschalteter Kühlstufe.

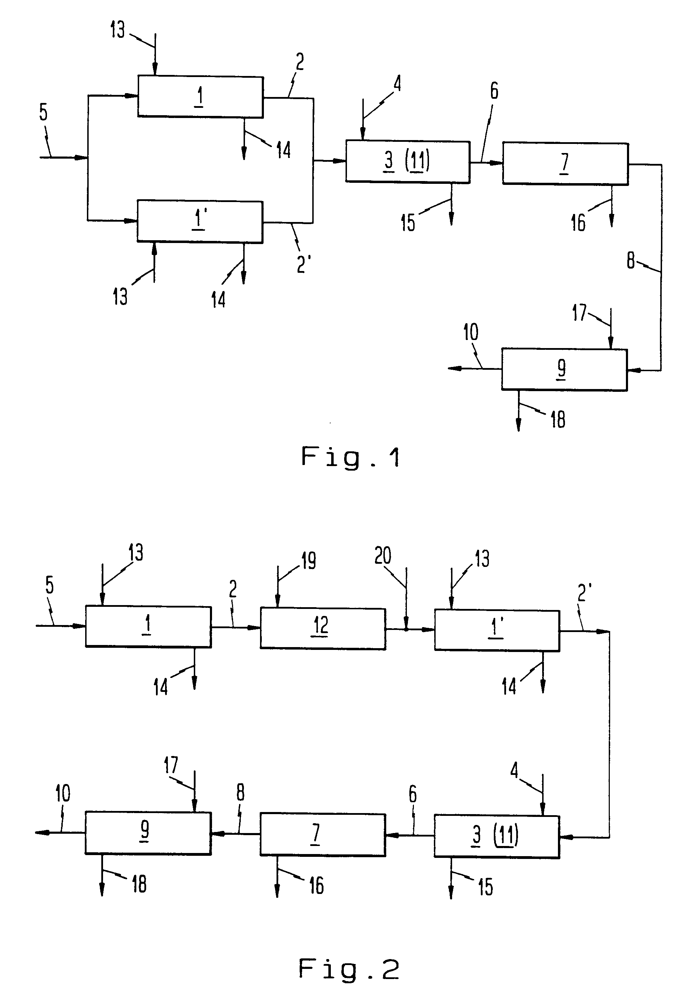

Die Figuren 1 und 2 zeigen ein schematisches Funktionsschaltbild zur Verdeutlichung eines Verfahrens zum Abbrennen von Explosivstoffen, welches auch gleichzeitig der Erläuterung der wesentlichen Bestandteile einer Anlage zum Abbrennen von Explosivstoffen dienen.

Das Funktionsschaubild gemäß Fig. 1 zeigt zwei in Parallelschaltung betriebene Abbrenn-Reaktoren 1, 1′, in denen Explosivstoffe 13 unter Einspeisung von Frisch- oder Zuluft 5 abgebrannt werden. Die beim Abbrand der Explosivstoffe entstehenden gasförmigen Reaktionsprodukte, die Rauchgase, vermischen sich innerhalb der Abbrenn-Reaktoren 1, 1′ mit der zugeführten Zu- bzw. Frischluft (im folgenden nur noch Frischluft genannt) zu den aus den Abbrenn-Reaktoren 1, 1′ austretenden Gasgemischen 2, 2′. Ein Teil der beim Abbrand der Explosivstoffe 13 entstehenden Reaktionsprodukte fällt in Form von Asche 14 an, die gesondert entsorgt wird.

Während das beim Abbrand der Explosivstoffe 13 entstehende Rauchgas eine Temperatur von mehreren tausend Grad besitzt, sind die aus den Abbrenn-Reaktoren 1, 1′ austretenden Gasgemische 2, 2′ durch die Vermischung der Rauchgase mit der zugeführten Frischluft 5 auf eine einstellbare Temperatur von beispielsweise 300° C abgekühlt. Diese Gasgemische 2, 2′ werden der Brennkammer 3 einer Feuerungsanlage 11 zur Verbrennung von Brennstoffen 4 zugeführt und dienen als Brenngas mit einem (einstellbaren) Sauerstoffgehalt von beispielsweise 16 bis 20 %.

Auf dem Weg von den Abbrenn-Reaktoren 1, 1′ durchlaufen die Gasgemische 2, 2′ in der Abbildung nicht dargestellte Partikelfilter, die einer (Zwischen-)Reinigung der Gasgemische 2, 2′ dienen.

Die Feuerungsanlage 11 kann beispielsweise die übliche Wärmeerzeugung in einem Kraftwerk, eine Müllverbrennungsanlage oder aber auch der Hochofenteil eines Zementwerks sein. Den Brennkammern 3 all jener Anlagen ist gemeinsam, daß dort unter Zufuhr von Brennstoffen 4 Wärme erzeugt wird, die in einer nachgeschalteten Energierückgewinnungsanlage 7, beispielsweise dem Dampferzeuger eines Kraftwerks, als Abgasgemisch 6 mit dem Energiegewinn 16 zugeführt wird. Die in der Brennkammer 3 bei der Verbrennung von beispielsweise Müll anfallenden Verbrennungsrückstände 15 sind in ihrer Zusammensetzung unabhängig von den Explosivstoffen 13. Jedoch beinhaltet die der Energierückgewinnungsanlage 7 entnehmbare Energie 16 die thermische Energie aus den Explosivstoffen 13 und aus den Brennstoffen 4. Durch die Einspeisung der Gasgemische 2, 2′ aus den Abbrenn-Reaktoren 1, 1′ in die Brennkammer 3 der Feuerungsanlage 11 wird eine äußerst wirksame Verbesserung der Energiebilanz der Anlage erzielt, da die Gasgemische 2, 2′ als Brenngas für die Brennkammer 3 bereits auf eine Temperatur von beispielsweise 300° C vorgewärmt sind, wobei die Temperatur der Gasgemische 2, 2′ durch die Zufuhr der Frischluft 5 grundsätzlich auf einen beliebigen Wert eingestellt werden kann.

Die aus der Energierückgewinnungsanlage 7 austretenden und abgekühlten Abgase 8 werden einer Schadstoffminderungsanlage 9 zugeleitet, der zur Behandlung der in dem Abgas 8 enthaltenen Schadstoffe Bindemittel 17 zugeführt wird. Die Ausgangsprodukte der Schadstoffminderungsanlage 9 sind ein gebundener, deponie- oder weiterverarbeitungsfähiger Schadstoffabfall 18 sowie ein Abgasgemisch 10, welches unter Einhaltung der 17. BImSchV in die Umgebung abgegeben oder aber an verschiedene Verfahrensstufen in das Verfahren zurückgeführt wird.

Beispielsweise kann es zur Optimierung der Energiebilanz der Gesamtanlage vorteilhaft sein, das aus der Energierückgewinnungsanlage 7 abgeführte Abgas 8 oder aber das aus der Schadstoffminderungsanlage 9 abgegebene Abgasgemisch 10 ganz oder teilweise den Abbrenn-Reaktoren 1, 1′ anstelle der Frischluft 5 oder aber auch als Zusatz zur Frischluft 5 zuzuführen.

Fig. 2 zeigt ein der Fig. 1 weitestgehend entsprechendes Funktionsschaubild, wobei hier in der Fig. 2 die Abbrenn-Reaktoren 1, 1′ in Bezug auf die Leitung des jeweiligen Gasgemischs 2, 2′ nicht in Parallelschaltung, sondern in Reihenschaltung betrieben werden. Dem ersten Abbrenn-Reaktor 1 wird Frischluft 5 zugeführt, die sich innerhalb des Abbrenn-Reaktores 1 wiederum mit den beim Abbrand der Explosivstoffe 13 entstehenden heißen Rauchgase unter starker Abkühlung zu einem Gasgemisch 2 vermengt.

Im Falle einer einstufigen Anlage, d.h. bei Anordnung nur eines Abbrenn-Reaktors 1, würde dieses Gasgemisch 2 direkt der Brennkammer 3 der Feuerungsanlage 11 zugeführt werden.

Im vorliegenden Falle einer mehrstufigen Ausführung eines Verfahrens und einer Anlage zum Abbrennen von Explosivstoffen wird das aus dem ersten Abbrenn-Reaktor 1 austretende Gasgemisch 2 zunächst einer Kühlstufe 12 zugeführt, die das Gasgemisch 2 von einer beispielhaft genannten Temperatur von 300° C auf eine wesentlich niedrigere Temperatur eines Zwischengasgemisches 21 abkühlt, welches dann in den zweiten Abbrenn-Reaktor 1′ eingespeist wird. Dieses Zwischengasgemisch 21 hat bei dem zweiten Abbrenn-Reaktor 1′ die Kühlfunktion, welche die Zu- oder Frischluft 5 bei dem Abbrenn-Reaktor 1 wahrnimmt. Eine weitere Abkühlung des Zwischengasgemischs 21 oder aber eine Anreicherung mit Sauerstoff kann wahlweise auch durch weitere Zufuhr von Frischluft 20 in den zweiten Abbrenn-Reaktor 1′ erfolgen.

Die Kühlstufe 12 ist beispielhaft als Einspritzkühler (Quencher) unter Verwendung von Wasser 19 ausgeführt.

Die Funktionsweise der Verbrennungsstufe (Brennkammer 3) und der nachfolgenden Verfahrensstufen (Energierückgewinnungsanlage 7 und Schadstoffminderungsanlage 9) ist identisch mit der zu Fig. 1 beschriebenen Anlage bzw. dem Verfahren.

Auch bei dieser Anordnung der Abbrenn-Reaktoren 1, 1′ bzw. dem damit verbundenen Verfahren werden den Abbrenn-Reaktoren 1, 1′ in der Abbildung nicht dargestellte Filter, insbesondere Partikelfilter vor- bzw. nachgeschaltet, um die Gasgemische 2, 2′ zu reinigen.

Die Energierückgewinnungsanlage 7 kann mit hohem Wirkungsgrad betrieben werden, da aufgrund des bereits vorgewärmten Brenngases (Gasgemische 2, 2′) bereits in der Brennkammer 3 gegenüber bekannten Verfahren ein geringerer Verlust an thermischer Energie auftritt. Die Kombination einer Abbrenn-Anlage für Explosivstoffe mit einer Feuerungsanlage macht sich jedoch durch die Nutzbarmachung der heißen Gasgemische 2, 2′ bei der Verbrennung auch in dem geringeren Bedarf an Brennstoff 4 für die Verbrennung bemerkbar.

Mit dem vorliegenden Verfahren und der Anlage zum Abbrennen von Explosivstoffen ist auch die energieintensive Vernichtung von Explosivstoffen in Form eines Slurrys überflüssig. Die Explosivstoffe 13 können in ihrer reinen Form innerhalb der Abbrenn-Reaktoren 1, 1′ (oder auch in einem einzigen Abbrenn-Reaktor) abgebrannt werden, so daß die große Energiemenge zur Verdampfung des hohen Wasseranteils (beispielsweise 90 %) eines Slurrys nicht mehr aufzuwenden ist. Im vorliegenden Falle enthält das Abgasgemisch 6 idealisiert die vollständige thermische Energie sowohl aus dem Abbrand der Explosivstoffe 13 als auch aus der Verbrennung der Brennstoffe 4. Diese thermische Energie ist im Vergleich zum Wasserdampfanteil eines konventionell verbrannten Slurrys in einfacher Weise auf einem verhältnismäßig hohen Temperaturniveau rückgewinnbar.

## Patentansprüche

1. Verfahren zum Abbrennen von Explosivstoffen, bei dem die Explosivstoffe in einem Abbrenn-Reaktor (1) abgebrannt und die beim Abbrand entstehenden Rauchgase mit in den Abbrenn-Reaktor (1) eingespeister Frischluft (5) vermengt und dadurch abgekühlt und sodann aus dem Abbrenn-Reaktor (1) abgeführt werden,
dadurch gekennzeichnet,
daß das aus dem Abbrenn-Reaktor (1) abgeführte Gasgemisch (2) der Brennkammer (3) einer Feuerungsanlage (11) zur Verbrennung von Brennstoffen (4) zugeführt wird.

2. Verfahren nach Anspruch 1,
dadurch gekennzeichnet,
daß der Brennkammer (3) die Gasgemische (2; 2′) mehrerer in Bezug auf die Leitung des Gasgemischs in Parallelschaltung betriebener Abbrenn-Reaktoren (1; 1′) zugeführt werden (Fig. 1).

3. Verfahren nach Anspruch 1,
dadurch gekennzeichnet,
daß das aus dem Abbrenn-Reaktor (1) abgeführte Gasgemisch (2) einem weiteren Abbrenn-Reaktor (1′) zugeführt wird, und daß das in dem weiteren Abbrenn-Reaktor (1′) aus dem zugeführten Gasgemisch (2) und den Rauchgasen entstehende weitere Gasgemisch (2′) der Brennkammer (3) zugeführt wird (Fig. 2).

4. Verfahren nach Anspruch 3,
dadurch gekennzeichnet,
daß zwischen benachbarten Abbrenn-Reaktoren (1; 1′) eine Abkühlung des Gasgemisches (2) erfolgt.

5. Verfahren nach Anspruch 4,
dadurch gekennzeichnet,
daß die Abkühlung durch Zufuhr von Frischluft (5) erfolgt.

6. Verfahren nach einem der vorstehenden Ansprüche,
dadurch gekennzeichnet,
daß das aus der Brennkammer (3) der Feuerungsanlage abgeführte Abgasgemisch (6) einer Energierückgewinnungsanlage (7) zugeführt wird.

7. Verfahren nach Anspruch 6,
dadurch gekennzeichnet,
daß die aus der Energierückgewinnungsanlage (7) austretenden (abgekühlten) Abgase (8) einer Schadstoffminderungsanlage (9) zugeleitet werden.

8. Verfahren nach Anspruch 7,
dadurch gekennzeichnet,
daß die Abkühlung des Gasgemisches (2) zwischen den Abbrenn-Reaktoren (1; 1′) durch Rückführung des von der Schadstoffminderungsanlage (9) abgegebenen Abgasgemisches (10) erfolgt.

9. Verfahren nach einem der Ansprüche 6 bis 8,
dadurch gekennzeichnet,
daß das aus der Energierückgewinnungsanlage (7) abgeführte Abgas (8) ganz oder teilweise dem bzw. den Abbrenn-Reaktor(en) (1; 1′) zugeführt wird.

10. Verfahren nach einem der Ansprüche 7 bis 9,
dadurch gekennzeichnet,
daß das von der Schadstoffminderungsanlage (9) abgegebene Abgasgemisch (10) ganz oder teilweise dem bzw. den Abbrenn-Reaktor(en) (1; 1′) zugeführt wird.

11. Anlage zum Abbrennen von Explosivstoffen (13) mit einem Abbrenn-Reaktor (1), in dem die Explosivstoffe (13) abgebrannt werden, wobei die beim Abbrand entstehenden Rauchgase mit in den Abbrenn-Reaktor (1) eingespeister Frischluft (5) vermengt und dadurch abgekühlt und sodann über die Abgasleitungen aus dem Abbrenn-Reaktor (1) abgeführt werden,
dadurch gekennzeichnet,
daß der Abbrenn-Reaktor (1) mittels seiner Abgasleitungen an eine Feuerungsanlange (11) zur Verbrennung von Brennstoffen (4) angeschlossen ist.

12. Anlage nach Anspruch 11,
dadurch gekennzeichnet,
daß mehrere Abbrenn-Reaktoren (1; 1′) in Bezug auf die Leitung des Abgasgemischs parallel geschaltet sind (Fig. 1).

13. Anlage nach Anspruch 11,
dadurch gekennzeichnet,
daß mehrere Abbrenn-Reaktoren (1; 1′) in Bezug auf die Leitung des Abgasgemischs in Reihe geschaltet sind (Fig. 2).

14. Anlage nach Anspruch 13,
dadurch gekennzeichnet,
daß im Abgasstrom zwischen jeweils benachbarten Reaktoren (1; 1′) eine Kühlstufe (12) angeordnet ist.

15. Anlage nach Anspruch 14,
dadurch gekennzeichnet,
daß die Kühlstufe (12) einen Wärmetauscher, insbesondere einen Quencher, enthält.

16. Anlage nach Anspruch 14,
dadurch gekennzeichnet,
daß die Kühlstufe (12) eine Ansaugvorrichtung für Frischluft (5) enthält.

17. Anlage nach einem der Ansprüche 11 bis 16,
dadurch gekennzeichnet,
daß dem bzw. den Abbrenn-Reaktor(en) (1; 1′) Filter vor- und/oder nachgeschaltet sind.

18. Anlage nach einem der Ansprüche 11 bis 17,
dadurch gekennzeichnet,
daß eine Energierückgewinnungsanlage (7) vorgesehen ist, der das Abgasgemisch (6) der Feuerungsanlage (11) zugeführt wird.

19. Anlage nach Anspruch 18,
dadurch gekennzeichnet,
daß sich an die Energierückgewinnungsanlage (7) eine Schadstoffminderungsanlage (9) anschließt, der die Abgase (8) der Energierückgewinnungsanlage (7) zugeleitet werden.

## Claims

1. A method of deflagrating explosives, wherein the explosives are burnt up in a deflagration reactor (1) and the flue gases resulting during deflagration are mixed with fresh air (5) fed into the deflagration reactor (1), thereby being cooled, and then are discharged from the deflagration reactor (1), characterized in that the gas mixture (2) discharged from the deflagration reactor (1) is supplied to the combustion chamber (3) of a furnace (11) for the combustion of fuels (4).

2. The method as claimed in claim 1, characterized in that the gas mixtures (2; 2′) of a plurality of deflagration reactors (1; 1′) operated in parallel in respect of the conduction of the gas mixture are supplied to the combustion chamber (3) (fig. 1).

3. The method as claimed in claim 1, characterized in that the gas mixture (2) discharged from the deflagration reactor (1) is supplied to another deflagration reactor (1′) is supplied to another deflagration reactor (1′), and in that the other gas mixture (2′) resulting in the other deflagration reactor (1′) from the gas mixtures (2) supplied and from the flue gases is fed into the combustion chamber (3) (fig. 2).

4. The method as claimed in claim 3, characterized in that cooling of the gas mixture (2) takes place between adjacent deflagration reactors (1; 1′).

5. The method as claimed in claim 4, characterized in that the cooling takes place by supply of fresh air (5).

6. The method as claimed in any one of the preceding claims, characterized in that the exhaust gas mixture (6) withdrawn from the combustion chamber (3) of the furnace is supplied to an energy recuperation plant (7).

7. The method as claimed in claim 6, characterized in that the (cooled) exhaust gases (8) issuing from the energy recuperation plant (7) are supplied to a harmful substance reducing plant (9).

8. The method as claimed in claim 7, characterized in that the cooling of the gas mixture (2) between the deflagration reactors (1; 1′) takes place by recycling of the exhaust gas mixture (10) discharged from the harmful substance reducing plant (9).

9. The method as claimed in any one of claims 6 to 8, characterized in that the exhaust gas (8) discharged from the energy recuperation plant (7) is supplied entirely or partly to the deflagration reactor(s) (1; 1′).

10. The method as claimed in any one of claims 7 to 9, characterized in that the exhaust gas mixture (10) discharged from the harmful substance reducing plant (9) is supplied entirely or partly to the deflagration reactor(s) (1; 1′).

11. An installation for the deflagration of explosives (13), comprising a deflagration reactor (1) in which the explosives (13) are burnt up, the flue gases resulting during deflagration being mixed with fresh air (5) fed into the deflagration reactor (1), thereby being cooled, and then being discharged from the deflagration reactor (1) through exhaust gas pipes, characterized in that the deflagration reactor (1) is connected by its exhaust gas pipes to a furnace (11) for the combustion of fuels (4).

12. The installation as claimed in claim 11, characterized in that a plurality of deflagration reactors (1; 1′) are connected in parallel in respect of the conduction of the exhaust gas mixture (fig. 1).

13. The installation as claimed in claim 11, characterized in that a plurality of deflagration reactors (1; 1′) are connected in parallel in respect of the conduction of the exhaust gas mixture (fig. 2).

14. The installation as claimed in claim 13, characterized in that a cooling stage (12) is disposed in the exhaust gas stream between respective adjacent reactors (1; 1′).

15. The installation as claimed in claim 14, characterized in that the cooling stage (12) comprises a heat exchanger, especially a quencher.

16. The installation as claimed in claim 14, characterized in that the cooling stage (12) comprises a suction device for fresh air (5).

17. The installation as claimed in any one of claims 11 to 16, characterized in that filters are connected upstream and/or downstream of the deflagration reactor(s) (1; 1′).

18. The installation as claimed in any one of claims 11 to 17, characterized in that an energy recuperation plant (7) is provided which is fed with the exhaust gas mixture (6) from the furnace (11).

19. The installation as claimed in claim 18, characterized in that the energy recuperation plant (7) is followed by a harmful substance reducing plant (9) which is fed with the exhaust gases (8) from the energy recuperation plant (7).

## Revendications

1. Procédé pour la combustion de matières explosives, les matières explosives étant brûlées dans un réacteur de combustion (1) et les gaz de fumée libérés à la combustion étant mélangés à l'air frais (5) stocké dans le réacteur de combustion (1) pour être refroidis et évacués du réacteur de combustion (1),
caractérisé en ce que
le mélange gazeux (2) évacué du réacteur de combustion (1) est amené à une enceinte de combustion (3) d'une installation de chauffe (11) pour la combustion des substances combustibles (4).

2. Procédé selon la revendication 1,
caractérisé en ce que
l'enceinte de combustion (3) est alimentée en mélanges gazeux (2 ; 2′) de plusieurs réacteurs de combustion (1 ; 1′) en exploitations parallèles par rapport à la conduite du mélange gazeux (fig. 1).

3. Procédé selon la revendication 1,
caractérisé en ce que
le mélange gazeux (2), évacué du réacteur de combustion (1), est amené à un autre réacteur de combustion (1′) et en ce que l'autre mélange gazeux (2′) résultant, dans l'autre réacteur de combustion (1′), du mélange gazeux amené et des gaz de fumée, est amené à l'enceinte de combustion (3) (fig. 2).

4. Procédé selon la revendication 3,
caractérisé en ce qu'
entre les réacteurs de combustion voisins (1 ; 1′), on procède au refroidissement du mélange gazeux (2).

5. Procédé selon la revendication 4,
caractérisé en ce que
le refroidissement se fait par apport d'air frais (5).

6. Procédé selon l'une des revendications précédentes,
caractérisé en ce que
le mélange de gaz d'échappement (6), évacué de l'enceinte de combustion (3) de l'installation de chauffe, est amené à une installation de récupération d'énergie (7).

7. Procédé selon la revendication 6,
caractérisé en ce que
les gaz d'échappement (8) (refroidis) libérés par l'installation de récupération d'énergie (7) sont envoyés à une installation de réduction des substances nocives (9).

8. Procédé selon la revendication 7,
caractérisé en ce que
le refroidissement du mélange gazeux (2) entre les réacteurs de combustion (1 ; 1′) s'effectue par recirculation du mélange de gaz d'échappement (10) libéré par l'installation de réduction des substances nocives (9).

9. Procédé selon l'une des revendications 6 à 8
caractérisé en ce que
le gaz d'échappement (8), évacué de l'installation de récupération d'énergie (7), est amené entièrement ou partiellement au réacteur respectivement aux réacteurs de combustion (1 ; 1′).

10. Procédé selon l'une des revendications 7 à 9
caractérisé en ce que
le mélange gazeux (10), dégagé par l'installation de réduction des substances nocives (9), est amené entièrement ou partiellement au réacteur respectivement aux réacteurs de combustion (1 ; 1′).

11. Installation pour la combustion de matières explosives (13) comprenant un réacteur de combustion (1) dans lequel sont brûlées les matières explosives (13), les gaz de fumée générés par la combustion étant mélangés à de l'air frais (5) amené dans le réacteur de combustion (1) pour être refroidis et évacués du réacteur de combustion (1) par les conduites de gaz d'échappement,
caractérisée en ce que
le réacteur de combustion (1) est raccordé, au moyen de ses conduites de gaz d'échappement à une installation de chauffe (11) pour la combustion de substances combustibles (4).

12. Installation selon la revendication 11,
caractérisée en ce que
plusieurs réacteurs (1 ; 1′) sont montés en parallèle par rapport à la conduite du mélange de gaz d'échappement (fig. 1).

13. Installation selon la revendication 11,
caractérisée en ce que
plusieurs réacteurs (1 ; 1') sont montés en série par rapport à la conduite du mélange de gaz d'échappement (fig. 2).

14. Installation selon la revendication 13,
caractérisée en ce que
dans le courant de gaz d'échappement, un étage de refroidissement (12) est disposé entre les réacteurs voisins respectifs (1 ; 1′).

15. Installation selon la revendication 14,
caractérisée en ce que
l'étage de refroidissement (12) comprend un échangeur thermique, en particulier à injection.

16. Installation selon la revendication 14,
caractérisée en ce que
l'étage de refroidissement (12) comprend un dispositif d'aspiration pour l'air frais (5).

17. Installation selon l'une des revendications 11 à 16,
caractérisée en ce que
le respectivement les réacteur(s) de combustion (1 ; 1′) sont suivis et/ou précédés par des filtres.

18. Installation selon l'une des revendications 11 à 17,
caractérisée en ce qu'
il est prévu une installation de récupération d'énergie (7) qui est alimentée par le mélange de gaz d'échappement (6) provenant de l'installation de chauffe (11).

19. Installation selon la revendication 18,
caractérisée en ce que
l'installation de récupération d'énergie (7) est suivie d'une installation de réduction des substances nocives (9) à laquelle sont amenés les gaz d'échappement (8) de l'installation de récupération d'énergie (7).
